# EUROPÄISCHE PATENTSCHRIFT

(11) **EP 0 994 084 B1**
(45) Veröffentlichungstag und Bekanntmachung des Hinweises auf die Patenterteilung: **21.01.2004**
(21) Anmeldenummer: 99120390.2
(22) Anmeldetag: 13.10.1999
(51) Int. Cl.: C04B 35/573, F41H 5/04, C04B 35/80

(54) **Schutzpanzerung**
Protective armour
Blindage de protection

(30) Priorität: 14.10.1998 DE 19847358; 19.10.1998 DE 19847915; 08.12.1998 DE 19856597; 02.11.1998 DE 19850468
(43) Veröffentlichungstag der Anmeldung: 19.04.2000
(73) Patentinhaber: INDUSTRIEANLAGEN-BETRIEBSGESELLSCHAFT M.B.H., 85521 Ottobrunn (DE); Goedtke, Peter, 81667 München (DE)
(72) Erfinder: Schwarz, Rudolf F., Prof. Dr.-Ing., 85521 Ottobrunn (DE); Papenburg, Ulrich, 85658 Egmating (DE); Pfrang, Wilhelm, 85354 Freising (DE); Goedtke, Peter, 81667 München (DE)
(74) Vertreter: Bohnenberger, Johannes, Dr.

(56) Entgegenhaltungen:
- EP-A- 0 045 134
- EP-A- 0 244 993
- EP-A- 0 376 794

## Beschreibung

Die Erfindung betrifft eine Schutzpanzerung nach dem Oberbegriff des Patentanspruches 1 sowie ein Verfahren zur Herstellung einer solchen Schutzpanzerung.

Insbesondere dreht es sich bei der vorliegenden Erfindung um eine ballistische Leichtgewicht-Schutzpanzerung.

Die EP 0 045 134 A1 offenbart hierzu dichte, solide Verbundmaterialien, die aus Mischungen von Silizium und Siliziumkarbid hergestellt sind. Diese Verbundmaterialien zeichnen sich dadurch aus, dass in einer im wesentlichen homogenen Matrix von Silizium Siliziumkarbid in fein verteilter Form vorliegt. Der Siliziumkarbidanteil beträgt 40 Vol.-% bis 60 Vol.-% und der Siliziumanteil liegt zwischen 60 Vol.-% und 40 Vol.-%. Das Verbundmaterial wird zunächst zu einem Grünkörper geformt und anschließend in Abwesenheit von Kohlenstoff mit geschmolzenem Silizium imprägniert. Nachteilig bei dem auf diese Weise hergestellten Verbundmaterial ist das einerseits hohe Gewicht und die vergleichsweise geringe Stabilität und unzureichende Splitterfestigkeit gegenüber Geschoßen. Für eine Leichtgewicht-Schutzpanzerung ist das dortige Verbundmaterial demzufolge nicht geeignet.

Aus der DE 34 26 457 C2 sind geschoßfeste Plattenmaterialien als geschoßkommendes Flächengebilde mit einem textilen Laminat für schußsichere Westen, Schilde, Panzerplatten und dergleichen zur Aufhaltung von Geschossen oder dergleichen mit hoher Energie bekannt. Um bei einem möglichst geringen Gewicht eine Vielzahl von nahe beeinanderliegenden Schüssen, insbesondere von Hartkerngeschossen mit hoher Geschwindigkeit und damit hoher Auftreffenergie unwirksam zu machen, wird in der Druckschrift vorgeschlagen, ein erstes Bindemittel zwischen einer metallischen oder keramischen Frontschicht und einem darunterliegenden Aramid-Laminat einzusetzen, dessen Haftfähigkeit um wenigstens 50% über der Haftfähigkeit eines zweiten Bindemittels liegt, welches zwischen den Lagen des Laminates eingesetzt wird. Dabei soll die Haftfähigkeit des ersten Bindemittels mindestens 60 N/5cm betragen. Das Bindemittel mit der höheren Haftfähigkeit soll beim Einsatz von Keramikkacheln bewirken, daß die zerstörten Kacheln mit ihrer Restmasse auch weiterhin mit der obersten Aramid-Gewebelage verbunden bleibt. Die umliegenden Kacheln sollen sich im wesentlichen nicht verschieben können. Infolge der hohen Haftfähigkeit fängt also dieses Bindemittel die bei der Zerstörung der Kacheln auftretenden Kräfte auf und gibt diese insgesamt an die Verbundstruktur des Aramid-Schutzpaketes weiter. Aus diesem Grund wird in der Druckschrift auch vorgeschlagen, zwischen den Kacheln in den Spalten ebenfalls das Bindemittel mit hoher Haftfähigkeit einzusetzen, um dadurch einerseits die Reibung zwischen den Kanten der Kacheln zu vermindern und andererseits die elastische übertragung der Kräfte ohne Kacheldruck auf das gesamte Kachelpaket zu fördern. Die bekannte Panzerung ist recht aufwendig in der Herstellung und weist trotz eines hohen Flächengewichtes nur eine unzureichende Schutzwirkung auf.

Aus der DE 29 43 680 A1 ist ein plattenförmiges Panzerelement bekannt, welches eine Platte aus einem geschoßbrechenden Hartstoff aufweist, auf deren Rückseite ein geschoßhemmender Stützstoff angeordnet ist. Als geschoßhemmender Stützstoff werden spezielle Aramidfasergewebe vorgeschlagen, die mehrere lose geschmiedete Lagen bilden und nur schwach miteinander verbunden sind. Dieses Stützgewebe hat die Aufgabe, den durch einen Beschuß zerstörten bzw. verformten Hartstoff im Gesamtaufbau zusammenzuhalten. Auch hier ist die Schutzwirkung trotz hohen Flächengewichtes nicht hinreichend.

Aus der DE 35 08 848 A1 ist ein Panzerelement bekannt, das eine oberste Schicht aus mosaikförmig aneinandergefügten Hartstoffplatten aus Keramik aufweist. Diese oberste Schicht ist mit einem darunter angeordneten Träger verbunden, der eine energieaufnehmende Schicht darstellt und nur so steif ausgebildet ist, daß er gerade den Verbund mit den Hartstoffplatten zu tragen vermag. Gleichzeitig kann der Träger als energieaufnehmende Schicht ausgebildet sein, die relativ grobporig ist, um beim Eindringen des Geschosses in die Panzerplatte weniger Material wegdrängen zu müssen. Die geringe Steifigkeit des Trägers wird durch einen weiteren Träger aus Metall oder Kunststoff ergänzt. Ein auf das Panzerelement auftreffendes Geschoß zertrümmert die Hartstoffplatten und wird zusammen mit den Hartstoffplatten durch die erste und zweite Trägerschicht abgebremst, wobei sich diese beiden Trägerschichten verformen. Eine schlagzähe Umhüllung verbindet die Hartstoffplatten zusammen mit den Trägerschichten und soll einen allseitigen Splitterschutz bieten. Der Aufbau dieser Schutzpanzerung ist relativ aufwendig, die Schutzwirkung trotz hohen Flächengewichtes ist nicht hinreichend.

Desweiteren offenbart die EP 0 376 794 A1 ein keramisches Mehrschichtschutzmaterial, das Elemente aus gesinterter Keramik aufweist, die an wenigstens eine Schicht aus einem Verbundmaterial mit einer faserstoffartigen Verstärkungsstruktur assoziiert sind, wobei eine keramische Matrix hinter den gesinterten Keramikelementen angeordnet ist. Die keramische Matrix besteht hierbei aus einem Verbund vom Typ Keramik-Keramik, wie z. B. SiC-SiC. Die gesinterten Keramikelemente sind mittels Klebstoff an der Keramikmätrix (CMC) befestigt. Nachteilig bei diesem keramischen Schutzmaterial ist wiederum das hohe Flächengewicht bei einer gleichzeitig unzureichenden Schutzwirkung.

Ausgehend vom oben genannten Stand der Technik ist es Aufgabe der vorliegenden Erfindung, eine Schutzpanzerung aufzuzeigen, die mit relativ geringem Aufwand herstellbar ist und trotz geringen Flächengewichtes eine hinreichende Schutzwirkung aufweist.

Diese Aufgabe wird durch die Schutzpanzerung nach Patentanspruch 1 gelöst. Ein Verfahren zur Herstellung der Schutzpanzerung ist im Anspruch 13 beschrieben.

Der hier verwendete Werkstoff ist beispielsweise aus der DE 42 07 009 bekannt. Ein besonders bevorzugtes Verfahren zur Herstellung des Werkstoffes bzw. derartige Werkstoffe sind insbesondere auch in der nicht vorveröffentlichten DE 198 50 468 beschrieben, auf deren Gesamtoffenbarung hier besonders Bezug genommen wird. Das Material wird auch als C/SiC-Werkstoff bezeichnet.

Ein ganz wichtiges Merkmal der C/SiC-Panzerung ist deren Bruch-/Rißzähigkeit, die bei gleicher Härte im Vergleich zu bisher verwendeten monolithischen Hartstoffkeramiken, wie z. B. Aluminiumoxid, Borkarbid, Siliziumkarbid oder Siliziumnitrid erheblich höher ist. Durch diese höhere Rißzähigkeit kommt es beim Auftreffen eines Geschosses nicht mehr zur kompletten Zerstrümmerung der keramischen Hartstoffschicht. Durch diese geringere Zerstörung der C/SiC-Panzerung wiederum kann eine wesentlich bessere Schutzwirkung erzielt werden, als dies bei pulvermetallurgisch hergestellten monolithischen Keramiken der Fall ist. Bei gleicher Schutzwirkung zeigt die C/SiC-Panzerung, die vorzugsweise eine Dichte im Bereich von 2-2,7 g/cm³ (je nach Faser-/Matrixgehalt) aufweist, ein wesentlich geringeres Flächengewicht als eine konventionelle Stahl- oder Keramikpanzerung. Dieses Flächengewicht liegt unter 30 kg/m².

Die C/SiC-Panzerung ist gas- und flüssigkeitsdicht und weist keinerlei Porösität auf. Sie besitzt weiterhin im Vergleich zu konventionellen Panzerungen eine ausgezeichnete Korrosions- und Witterungsbeständigkeit. Die Panzerung eignet sich besonders als Schutz gegen kleinkalibrige Munition wie Pistolen- und Gewehrmunition. Bei einer Geschoßstopwirkung für eine Kaliber von 7,62 mmAP liegt das spezifische Flächengewicht unter 30 kg/m². Ein Splitterschutz ist außerdem gegeben. Damit eignet sich diese Panzerung sowohl zum zivilen Schutz von Personen, Kraftwagen usw. als auch für den Militärbereich (Panzer, Hubschrauber usw.). Die C/SiC-Deckschicht ist vorteilhaft für den Gebrauch für Panzerung in aggressiven Medien sowie zur Tarnung der mit der Panzerung versehenen Geräte einzusetzen. Durch eine geeignete Beschichtung bzw. Compoundierung der äußeren C/SiC-Schicht kann ein zusätzlicher Effekt zum Schutz bei Infrarot- und Radaraufklärung erreicht werden.

Vorzugsweise weist der Formkörper aus C/SiC-Material an seiner äußeren, geschoßkommenden Seite eine höhere Härte, und an seiner inneren, der Backing-Struktur zugewandten Seite eine niedrigere Härte bei erhöhter Verformbarkeit und/oder Bruchzähigkeit auf, was die Schutzwirkung erheblich verstärkt. Hierbei wird insbesondere der Formkörper so ausgebildet, daß er eine, seiner Härte und Bruchzähigkeit angepaßte und mit ihr von seiner äußeren zu seiner inneren Seite hin variierende Fasermenge bzw. Faserverstärkung aufweist. Dies bedeutet, daß die für die Panzerung relevanten Eigenschaften wie Härte, Schallgeschwindigkeit und Dichte durch Variationen im Faser-/Matrixgehalt bzw. die Faserverstärkung und die Menge an reagiertem SiC im Kohlenstoffasergerüst auf die jeweilige Bedrohung einstellbar sind. Die Härte kann man z. B. zwischen 1000-2400 N/m² und die Schallgeschwindigkeit zwischen 8000-11000 m/s durch die Art der Faserverstärkung bzw. durch die Menge der eingebrachten Fasern in den Kohlenstoff-Formkörper sowie die Infiltrationsparameter bei der Silizierung einstellen.

Die Backing-Struktur wird vorzugsweise ausgewählt aus Aramid-Formkörpern, GFK-Formkörpern, Polyethylenfaser-Formkörpern, CFK-Formkörpern oder Metall-Formkörpern ausgewählt.

Die Aufbringung der Formkörper auf die Backing-Struktur erfolgt vorzugsweise mittels eines Bindemittels, besonders bevorzugterweise mittels Polyurethan.

Der C/SiC-Formkörper wird vorzugsweise so ausgebildet, daß er eine von außen nach innen abnehmende Härte und zunehmende Verformbarkeit bzw. Bruchzähigkeit aufweist. Dies kann so geschehen, daß der Formkörper aus mindestens zwei aufeinanderliegenden, vorzugsweise aufeinandergeklebten Formkörpern unterschiedlicher Härte und Bruchzähigkeit besteht. Alternativ, gegebenenfalls aber auch zusätzlich (also bei jedem der aufeinanderliegenden Formkörpern) kann eine von seiner äußeren zu seiner inneren Seite im wesentlichen kontinuierlich variierende Härte bzw. Bruchzähigkeit vorgesehen werden, indem man die Fasermenge und/oder Faserverstärkung zur Herstellung eines Gradienten-C/SiC-Verbundwerkstoffs variiert.

Der Formkörper weist einen derart gestalteten Außenumriß, vorzugsweise einen rechteckigen oder sechseckigen Außenumriß auf, daß weitere Formkörper im wesentlichen lückenlos aneinander ansetzbar sind, um eine im wesentlichen durchgehende Panzerung der Außenschicht herzustellen, die sich gut in jeder Form einer Auflageschicht bzw. einer Trägerkonstruktion anpassen kann. Weiterhin weisen die Formkörper vorzugsweise derart geformte, insbesondere abgeschrägte oder konkave oder konvexe Außenkonturen auf, daß entsprechend geformte weitere Formkörper aneinander an den Rändern überlappend ansetzbar sind, um die Durchgängigkeit der Außenschicht zu verbessern. Die aneinander angesetzten Formkörper werden vorzugsweise an ihren Rändern miteinander verklebt.

Das Fasermaterial wird vorzugsweise vor dem Infiltrieren mit Silizium in die Gestalt des fertigen Formkörpers gebracht. Dadurch können auch kompliziertere Formen mit allen notwendigen Ausnehmungen, beliebigen Wandstärken, Wandstärkenvariationen und Größen hergestellt werden. Die Herstellung im Grünzustand verlangt keine hohen Werkzeugkosten und ist wenig aufwendig.

Zur Herstellung der Schutzpanzerung bearbeitet man Kohlenstoff-Formkörper, insbesondere Platten mit Kohlenstoffaserverstärkung, insbesondere Kurzfaser- und/oder Filzverstärkung und/oder Gewebeverstärkung so, daß sie die gewünschten Maße und Formen aufweisen.

Diese Bearbeitung kann mittels konventioneller, spanabhebender Bearbeitungstechniken, insbesondere durch Drehen, Fräsen oder Sägen geschehen. Diese Halbzeuge aus kohlenfaserverstärktem Kohlenstoff (C/C) werden in einem Ofen unter Sauerstoffausschluß, insbesondere in einem Vakuum auf Temperaturen über 1405°C aufgeheizt und mit Silizium infiltriert. Bei einem weiteren Aufheizen reagiert der Kohlenstoff aus den Formkörpern mit dem infiltrierten Silizium zumindest teilweise zu Siliziumkarbid, so daß (nach dem Abkühlen) die Formkörper nunmehr aus kohlenstoffaserverstärktem Siliziumkarbid bestehen. Diese Formkörper bilden ballistische Schutzplatten, die mittels eines Bindemittels, vorzugsweise mittels Polyurethan auf Aramidplatten und/oder GFK-Platten und/oder Polyethylenfaser-Formkörpern und/oder CFK-Platten und/oder Metall-Platten, welche als Backing-Struktur dienen, aufgeklebt werden.

Vorzugsweise werden zwei oder mehr derartige C/SiC-Formkörper mit unterschiedlicher Härte bzw. Bruchzähigkeit aufeinandergeklebt, um so einen Verbundkörper zu bilden, da eine in Richtung auf die Backing-Struktur zunehmende Bruchzähigkeit (und abnehmende Härte) aufweist. Alternativ (oder zusätzlich) kann man sowohl die Infiltrieriung mit Silizium als auch die Dichte der Kohlenstoffasern derart mit einem Gradienten einstellen, daß sie diese eine erhöhte Bruchzähigkeit (sinkende Härte) in jedem einzelnen Formkörper ergibt. Hierbei wird die Infiltrierung mit Silizium vorzugsweise durch folgende Verfahrensschritte durchgeführt:
- Herstellen eines flüssigen oder klebrigen Bindemittels, welches aushärtbar ist und mit Kohlenstoff dotiert wird;
- Beschichten von Partikeln oder Gruppen von Partikeln eines Silizium-Pulvers oder Silizium-Granulats mit dem Bindemittel zur Herstellung von Spendersilizium;
- Formen des Spendersiliziums entsprechend den Oberflächen des aus kohlenstoffaserverstärktem Kohlenstoff bestehenden Grünkörpers zur Herstellung von Spendersilizium-Formkörpern;
- Trocknen und Aushärten der Spendersilizium-Formkörper;
- Auflegen der Spendersilizium-Formkörper auf den Grünkörper;
- Aufheizen des Grünkörpers mit aufgelegten Spendersilizium-Formkörpern auf Temperaturen, bei denen Silizium schmilzt und darüber hinaus bis der Kohlenstoff mit dem Silizium unter Bildung von Siliziumkarbid reagiert;
- Infiltrieren des Grünkörpers mit Spendersilizium, das aus den Spendersilizium-Formkörpern nach unten auf den Grünkörper fließt.

Die Menge des Spendersiliziums kann hierbei so eingestellt werden, daß sie zu einer vollständigen Silizierung des Grünkörpers nicht ausreicht. Der Silizierungsvorgang verläuft dann zwangsläufig inhomogen. Es ist auch möglich, die Infiltrierung des Grünkörpers mit Spendersilizium derart vorzunehmen, daß man den Grünkörper in ein Bett (Bad) aus Spendersilizium legt, so daß das geschmolzene Silizium aufgrund der Dochtwirkung des Grünkörpers in diesem nach oben steigt. Auch dadurch kann in relativ einfacher Weise ein vorbestimmter Gradient hinsichtlich der Durchdringung mit Silizium und der darauffolgenden Reaktion des Kohlenstoffes mit Silizium eingestellt werden, so daß die gewünschte Zunahme der Bruchzähigkeit (Abnahme der Härte) von einer Fläche des Formkörpers zur anderen sichergestellt wird.

Nachfolgend werden Ausführungsbeispiele der Erfindung anhand von Abbildungen näher beschrieben.

Hierbei zeigen:
- Fig. 1: eine erste bevorzugte Ausführungsform der Erfindung in einem Teilschnitt;
- Fig. 2: eine zweite Ausführungsform der Erfindung in einer Darstellung ähnlich der nach Fig. 1 zur Erläuterung verschiedener Möglichkeiten der Formgebung der Ränder und
- Fig. 3: eine dritte bevorzugte Ausführungsform zur Erläuterungen eines mehrschichtigen oder inhomogenen Aufbaus.

In der nachfolgenden Beschreibung werden für gleiche und gleichwirkende Teile dieselben Bezugsziffern verwendet.

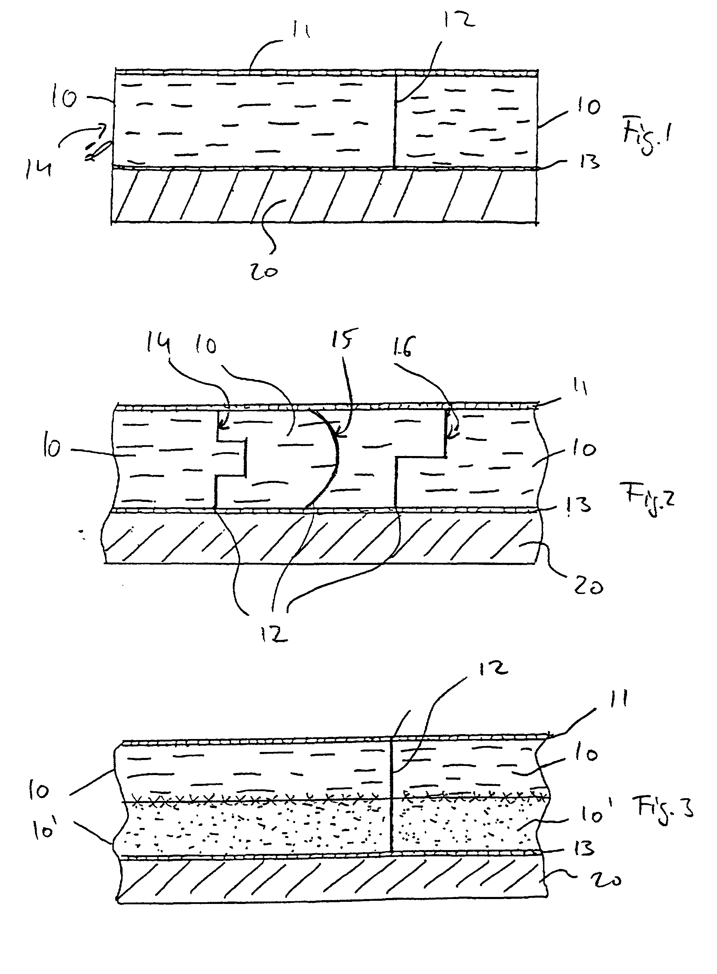

Die in Fig. 1 gezeigte Ausführungsform der Schutzpanzerung umfaßt nach dem oben beschriebenen Verfahren hergestellte C/SiC-Formkörper 10, die mittels eines Klebefilms 13 auf einer Backing-Struktur 20 aufgeklebt sind. Die Ränder 14 aneinandergrenzender Formkörper 10 sind über Klebefilme 12 zusammengehalten. Auf der Oberfläche (auf der geschoßkommenden Seite) ist ein elastischer Klebefilm 11 vorgesehen.

In Fig. 2 sind verschiedene Formen von Rändern 14, 15, oder 16 aufgezeigt, die entweder zur Bildung planer Strukturen (14, 16) oder zur Bildung gewölbter Strukturen (15) dienen. Es sind hier vielerlei Strukturen dieser Art denkbar, wobei die erfindungsgemäße Schutzpanzerung bzw. das erfindungsgemäße Verfahren sich zur Herstellung solcher Strukturen besonders eignen, da die Grünkörper lediglich aus Kohlenstoff bestehen und darum sehr leicht mit konventionellen Werkzeugen (insbesondere spanabhebend) formbar sind. Es ist auch möglich, keine planen Formkörper 10 (wie in den Abbildungen gezeigt) herzustellen, sondern auch beliebig gekrümmte durch eine entsprechende Herstellung der kohlenstoffaserverstärkten Rohlinge.

Die in Fig. 3 gezeigte Ausführungsform der Erfindung unterscheidet sich von den Ausführungsformen nach Fig. 1 und 2 dadurch, daß die Formkörper 10 unterteilt sind in einen oberen Formkörper 10 und einen unteren Formkörper 10', die jeweils unterschiedliche Fasergehalte aufweisen. Der obere Formkörper 10 auf der geschoßkommenden Seite weist einen geringeren Fasergehalt und damit eine größere Härte auf, als der untere Formkörper 10', der wiederum eine erhöhte Bruchzähigkeit aufweist. Die Verbindung zwischen den oberen und unteren Formkörpern kann über eine Klebeschicht erfolgen. Es ist auch möglich, die beiden Formkörper 10 und 10' unter Zwischenlage von Silizium aufeinanderzustapeln und im Vakuumofen nach entsprechendem Aufheizen über die Schmelztemperatur von Silizium miteinander sozusagen zu verschweißen. Schließlich ist es auch möglich (jedoch zeichnerisch kaum darstellbar), die Formkörper so herzustellen, daß sie einen sich graduell mit der Tiefe (in Richtung auf die Backing-Struktur 20) ändernden Fasergehalt mit steigender Bruchzähigkeit und sinkender Härte aufweisen.

### Bezugszeichenliste

- 10: C/SiC-Formkörper
- 11: Elastischer Klebefilm
- 12: Klebefilm
- 13: Klebefilm
- 14-16: Rand
- 20: Backing-Struktur

## Patentansprüche

1. Schutzpanzerung, insbesondere ballistische Leichtgewichtschutzpanzerung umfassend:
- mindestens einen Formkörper (10) aus einem geschoßfesten Material und
- eine Backing-Struktur (20) zum Zusammenhalten der Formkörper (10) und zur Bildung eines Flächengebildes
**dadurch gekennzeichnet, daß**
der Formkörper (10) aus einem Gewebe, Gewirke, Gestricke oder dergleichen Fasermaterial aus Kohlenstoff besteht, das in einem Silizierungsvorgang durch Infiltrieren mit Silizium zu kohlenstoffaserverstärktem Siliziumkarbid umgewandelt ist.

2. Schutzpanzerung nach Anspruch 1,
**dadurch gekennzeichnet, daß**
der Formkörper (10) an seiner äußeren, geschoßkommenden Seite eine höhere Härte und an seiner inneren, der Backing-Struktur zugewandten Seite eine niedrigere Härte bei erhöhter Verformbarkeit und/oder Bruchzähigkeit aufweist.

3. Schutzpanzerung nach einem der vorhergehenden Ansprüche,
**dadurch gekennzeichnet, daß**
der Formkörper eine, seiner Härte und Bruchzähigkeit angepaßte und mit ihr von seiner äußeren Seite zur inneren Seite hin variierende Fasermenge und/oder Faserverstärkung aufweist.

4. Schutzpanzerung nach einem der vorhergehenden Ansprüche,
**dadurch gekennzeichnet, daß**
der Formkörper (10) aus mindestens zwei aufeinanderliegenden, vorzugsweise aufeinandergeklebten Formkörpern (10, 10') unterschiedlicher Härte und Bruchzähigkeit besteht.

5. Schutzpanzerung nach einem der vorhergehenden Ansprüche,
**dadurch gekennzeichnet, daß**
der Formkörper eine von seiner äußeren zu seiner inneren Seite im wesentlichen kontinuierlich variierende Härte und Bruchzähigkeit aufweist.

6. Schutzpanzerung nach einem der vorhergehenden Ansprüche,
**dadurch gekennzeichnet, daß**
die Backing-Struktur ausgewählt ist aus Aramid-Formkörpern, GFK-Formkörpern, Polyethylenfaser-Formkörpern, CFK-Formkörper, Metall-Formkörpern.

7. Schutzpanzerung nach einem der vorhergehenden Ansprüche,
**dadurch gekennzeichnet, daß**
der Formkörper (10) auf die Backing-Struktur (20) mittels eines Bindemittels (13), vorzugsweise mittels Polyurethan, aufgeklebt ist.

8. Schutzpanzerung nach einem der vorhergehenden Ansprüche,
**dadurch gekennzeichnet, daß**
der Formkörper (10) einen derart gestalteten Außenumriß, vorzugsweise einen rechteckigen oder sechseckigen Außenumriß derart aufweist, daß weitere Formkörper (10) im wesentlichen lückenlos ansetzbar sind.

9. Schutzpanzerung nach Anspruch 8,
**dadurch gekennzeichnet, daß**
der Formkörper (10) derart geformte, insbesondere abgeschrägte oder konkave oder konvexe Außenkonturen oder Ränder (14, 15, 16) aufweist, daß entsprechend geformte weitere Formkörper (10) einander an den Rändern (14, 15, 16) überlappend ansetzbar sind.

10. Schutzpanzerung nach einem der Ansprüche 8 oder 9,
**dadurch gekennzeichnet, daß**
die aneinander angesetzten Formkörper (10) an ihren Rändern (14, 15, 16) miteinander verklebt (Klebefilm 12) sind.

11. Schutzpanzerung nach einem der vorhergehenden Ansprüche,
**dadurch gekennzeichnet, daß**
das Fasermaterial vor dem Infiltrieren mit Silizium in die Gestalt des fertigen Formkörpers gebracht ist.

12. Schutzpanzerung nach einem der vorhergehenden Ansprüche,
**dadurch gekennzeichnet, daß**
der Formkörper eine Dichte von 2-2,7 g/cm³ aufweist.

13. Verfahren zur Herstellung einer Schutzpanzerung, umfassend die Schritte:
- Herstellen mindestens eines Grünkörpers aus kohlenstofffaserverstärktem Kohlenstoff, der mindestens teilweise porös ist, wobei die Fasern insbesondere aus einem Gewebe, Gewirke, Gestricke oder dergleichen Fasermaterial aus Kohlenstoff bestehen;
- Aufheizen des Grünkörpers in einem Ofen unter Sauerstoffausschluß, insbesondere im Vakuum auf Temperaturen von über 1405°C;
- Infiltrieren des Grünkörpers mit flüssigem Silizium;
- Weiteres Aufheizen des Grünkörpers mit infiltriertem Silizium so lange, bis das Silizium mit dem Kohlenstoff mindestens teilweise reagiert hat;
- Abkühlen der Formkörper und Aufkleben auf eine Backing-Struktur.

14. Verfahren nach Anspruch 13,
**gekennzeichnet durch** folgende weiteren Verfahrensschritte:
- Herstellen eines flüssigen und/oder klebrigen Bindemittels, welches aushärtbar ist und mit Kohlenstoff dotiert wird;
- Beschichten von Partikeln oder Gruppen von Partikeln eines Silizium-Pulvers oder Silizium-Granulats mit dem Bindemittels zur Herstellung von Spendersilizium;
- Auftragen des Spendersiliziums auf den Grünkörper, bevor dieser in den Ofen zum Aufheizen verbracht wird.

15. Verfahren nach Anspruch 14,
**dadurch gekennzeichnet, daß**
das Spendersilizium vor dem Auftragen auf den Grünkörper geformt und gegebenenfalls getrocknet und/oder ausgehärtet wird.

16. Verfahren nach Anspruch 13;
**dadurch gekennzeichnet, daß**
der Grünkörper zum Infiltrieren mit Silizium in ein Bad aus Silizium derart gestellt wird, daß das Silizium aufgrund der Dochtwirkung im Grünkörper nach oben steigt.

17. Verfahren nach Anspruch 13,
**dadurch gekennzeichnet, daß**
das Silizium derart im Unterschuß zur Verfügung gestellt oder der Infiltrierungs- und Silizierungsvorgang derart frühzeitig abgebrochen wird, daß eine in der Vertikalen inhomogene Struktur entsteht.

## Claims

1. A protective armouring, in particular a ballistic lightweight protective armouring, comprising :
- at least one moulding (10) consisting of a projectile-proof material and
- a backing structure (20) for holding together the
moulding (10) and for forming a planar structure, **characterised in that** the moulding (10) consists of a woven fabric, a knitted fabric or similar fibrous material consisting of carbon, which in a siliconisation process by infiltration with silicon is converted into a carbon-fibre reinforced silicon carbide.

2. A protective armouring according to Claim 1, **characterised in that** on its outer projectile-receiving side the moulding (10) is of greater hardness and on its inner side facing the backing structure is of a lower hardness with increased deformability and/or fracture toughness.

3. A protective armouring according to any one of the preceding Claims, **characterised in that** the moulding has a fibre quantity and/or fibre reinforcement adapted to its hardness and fracture toughness and varying therewith from its outside to the inside.

4. A protective armouring according to any one of the preceding Claims, **characterised in that** the moulding (10) consists of at least two superimposed, preferably glued-together mouldings (10,10') of different hardness and fracture toughness.

5. A protective armouring according to any one of the preceding Claims, **characterised in that** the moulding is of a hardness and fracture toughness varying substantially continuously from its outside to its inside.

6. A protective armouring according to any one of the preceding Claims, **characterised in that** the backing structure is selected from aramid mouldings, GRP mouldings, polyethylene fibre mouldings, CFRP mouldings, metal mouldings.

7. A protective armouring according to any one of the preceding Claims, **characterised in that** the moulding (10) is adhered to the backing structure (20) by means of a binding material (13), preferably by means of polyurethane.

8. A protective armouring according to any one of the preceding Claims, **characterised in that** the moulding (10) has an outer contour, preferably a rectangular or hexagonal outer contour, of such a configuration that further mouldings (10) can be applied substantially without gaps.

9. A protective armouring according to Claim 8, **characterised in that** the moulding (10) has outer contours or edges (14,15,16) which are so shaped, in particular bevelled or concave or convex, that correspondingly shaped further mouldings (10) can be applied mutually overlapping at the edges (14,15,16).

10. A protective armouring according to Claim 8 or 9, **characterised in that** the mouldings (10) applied against one another at their edges (14,15,16) are bonded together (adhesive film 12).

11. A protective armouring according to any one of the preceding Claims, **characterised in that** the fibrous material is brought to the shape of the finished moulding before the infiltration with silicon.

12. A protective armouring according to any one of the preceding Claims, **characterised in that** the moulding has density of 2-2.7 g/cm³.

13. A method of producing a protective armouring, comprising the steps of:
- preparing at least one green body from carbon-fibre reinforced carbon which is at least partly porous, wherein the fibres consist of a woven fabric, a knitted fabric or similar fibrous material consisting of carbon;
- heating the green body in a kiln with oxygen exclusion, in particular in a vacuum at temperatures above 1405°C;
- infiltration of the green body with liquid silicon;
- further heating of the green body with infiltrated until the silicon reacts at least partly with the carbon;
- cooling of the moulding and adhering to a backing structure.

14. A method according to Claim 13, **characterised by** the following further method steps:
- preparing a liquid and/or adhesive binder which can be cured and is doped with carbon;
- coating particles or groups of particles of a silicon powder or granular silicon material with the binder to produce donor silicon;
- applying the donor silicon to the green body before it is placed in the kiln for heating.

15. A method according to Claim 14, **characterised in that** the donor silicon is moulded before application to the green body and, optionally, is dried and/or cured.

16. A method according to Claim 13, **characterised in that** for infiltration with silicon the green body is so placed in a bath of silicon that the silicon rises upwardly in the green body owing to the wick effect.

17. A method according to Claim 13, **characterised in that** the silicon is so made available in the lower section or the inf iltration and siliconisation process is so interrupted prematurely that a vertically inhomogeneous structure is formed.

## Revendications

1. Blindage de protection, en particulier blindage de protection balistique de poids léger, comprenant :
- au moins un corps moulé (10) en un matériau résistant aux projectiles et
- une structure backing (20) pour maintenir les corps moulés (10) et former une structure superficielle
**caractérisé en ce que** le corps moulé (10) se compose d'un tissu, d'un maillage, d'un tricotage ou autre matériau fibreux en carbone, qui est transformé en carbure de silicium renforcé de fibres de carbone dans une opération de siliciuration par infiltration au silicium.

2. Blindage de protection suivant la revendication 1, **caractérisé en ce que** le corps moulé (10) présente sur son côté extérieur, d'arrivée du projectile, une dureté supérieure et sur son côté intérieur, tourné vers la structure backing, une dureté inférieure pour une déformabilité et/ou résistance à la rupture accrues.

3. Blindage de protection suivant l'une des revendications précédentes, **caractérisé en ce que** le corps moulé présente une quantité de fibres et/ou un renforcement par fibres adaptés à sa dureté et à sa résistance à la rupture et variant avec ces dernières de son côté extérieur en direction de son côté intérieur.

4. Blindage de protection suivant l'une des revendications précédentes, **caractérisé en ce que** le corps moulé (10) se compose d'au moins deux corps moulés (10, 10') de dureté et de résistance à la rupture différentes, superposés, de préférence collés l'un à l'autre.

5. Blindage de protection suivant l'une des revendications précédentes, **caractérisé en ce que** le corps moulé présente une dureté et une résistance à la rupture variant en continu de son côté extérieur en direction de son côté intérieur.

6. Blindage de protection suivant l'une des revendications précédentes, **caractérisé en ce que** la structure backing est sélectionnée parmi des corps moulés d'aramide, corps moulés en matières plastiques renforcées de fibres de verre, corps moulés en fibres de polyéthylène, corps moulés en matières plastiques renforcées de fibres de carbone, corps moulés en métal.

7. Blindage de protection suivant l'une des revendications précédentes, **caractérisé en ce que** le corps moulé (10) est collé sur la structure backing (20) au moyen d'un liant (13), de préférence au moyen de polyuréthanne.

8. Blindage de protection suivant l'une des revendications précédentes, **caractérisé en ce que** le corps moulé (10) présente un contour extérieur, de préférence rectangulaire ou hexagonal, tel que d'autres corps moulés (10) peuvent être aboutés essentiellement sans vides.

9. Blindage de protection suivant la revendication 8, **caractérisé en ce que** le corps moulé (10) présente des contours extérieurs ou bords (14, 15, 16), en particulier chanfreinés ou concaves ou convexes, formés de sorte que d'autres corps moulés (10) formés en conséquence peuvent être aboutés en chevauchement mutuel sur les bords (14, 15, 16).

10. Blindage de protection suivant l'une des revendications 8 et 9, **caractérisé en ce que** les corps moulés (10) aboutés les uns aux autres sont collés entre eux sur leurs bords (14, 15, 16) (film adhésif 12).

11. Blindage de protection suivant l'une des revendications précédentes, **caractérisé en ce que** le matériau fibreux est amené dans la configuration du corps moulé fini avant l'infiltration au silicium.

12. Blindage de protection suivant l'une des revendications précédentes, **caractérisé en ce que** le corps moulé présente une masse volumique de 2 - 2,7 g/cm³.

13. Procédé de fabrication d'un blindage de protection, comprenant les phases :
- fabrication d'au moins un corps cru en carbone renforcé de fibres de carbone, qui est au moins en partie poreux, les fibres se composant en particulier d'un tissu, d'un maillage, d'un tricotage ou autre matériau fibreux en carbone,
- chauffage du corps cru dans un four en l'absence d'oxygène, en particulier sous vide à des températures de plus de 1405°C,
- infiltration du corps cru par du silicium liquide,
- chauffage ultérieur du corps cru avec le silicium infiltré jusqu'à ce que le silicium ait réagi au moins en partie avec le carbone,
- refroidissement des corps moulés et collage sur une structure backing.

14. Procédé suivant la revendication 13, **caractérisé par** des phases de procédé ultérieures suivantes :
- préparation d'un liant liquide et/ou adhésif, qui est durcissable et dopé au carbone,
- revêtement de particules ou de groupes de particules d'une poudre de silicium ou d'un granulat de silicium par le liant pour la préparation de silicium donneur,
- application du silicium donneur sur le corps cru, avant que ce dernier soit chargé dans le four pour le chauffage.

15. Procédé suivant la revendication 14, **caractérisé en ce que** le silicium donneur est moulé avant l'application sur le corps cru et éventuellement séché et/ou durci.

16. Procédé suivant la revendication 13, **caractérisé en ce que** le corps cru est placé dans un bain de silicium pour l'infiltration au silicium de sorte que le silicium s'élève vers le haut dans le corps cru en raison de l'effet de mèche.

17. Procédé suivant la revendication 13, **caractérisé en ce que** le silicium est fourni en défaut ou l'opération d'infiltration et de siliciuration est interrompue prématurément de sorte qu'il en résulte une structure inhomogène dans la verticale.
